# EUROPÄISCHE PATENTSCHRIFT

(11) **EP 3 015 210 B1**
(45) Veröffentlichungstag und Bekanntmachung des Hinweises auf die Patenterteilung: **26.02.2025**
(21) Anmeldenummer: 15179687.7
(22) Anmeldetag: 04.08.2015
(51) Int. Cl.: B23H 9/10, B23H 7/26, B23H 3/00, B23H 11/00

(54) **ELEKTROCHEMISCHE BEARBEITUNG EINES WERKSTÜCKS**
ELECTROCHEMICAL PROCESSING OF A WORKPIECE
TRAITEMENT ÉLECTROCHIMIQUE D'UNE PIÈCE

(30) Priorität: 11.09.2014 DE 102014218169
(43) Veröffentlichungstag der Anmeldung: 04.05.2016
(60) Teilanmeldung: 16195880.6
(73) Patentinhaber: MTU Aero Engines AG, 80995 München (DE)
(72) Erfinder: Huttner, Roland, 82287 Jesenwang (DE); Dietz, Heinz, 85221 Dachau (DE); Doll, Christian, 85229 Ainhofen (DE); Baur, Hermann, 86577 Sielenbach (DE); Kneilling, Rolf, 86576 Rapperzell (DE)

(56) Entgegenhaltungen:
- EP-A1- 1 097 774
- WO-A1-2012/152254
- FR-A- 1 396 638
- JP-A- 2006 305 645
- US-A- 4 430 544
- US-A- 5 244 548
- US-A1- 2006 272 957
- US-A1- 2011 070 096

## Beschreibung

Die Erfindung betrifft eine Anlage und Verfahren zur elektrochemischen Bearbeitung eines Werkstücks, insbesondere eines Gasturbinenbauteils.

Die elektrochemische Bearbeitung ("electrochemical machining" ECM) ist ein formgebendes Bearbeitungsverfahren zur Bearbeitung von Werkstücken, welches insbesondere bei der Bearbeitung von komplexen Oberflächenformen und/oder schwer zu bearbeitenden Werkstoffen in vorteilhafter Weise eingesetzt werden kann. Das Verfahren bedient sich der anodischen Oxidation des zu bearbeitenden Werkstoffs, wobei eine Arbeitselektrode mit einem Abstand zur zu bearbeitenden Oberfläche angeordnet, ein Elektrolyt im Spalt zwischen der zu bearbeitenden Oberfläche und der Elektrode vorgesehen und durch das Anlegen eines elektrischen Potentials zwischen der Elektrode und dem zu bearbeitenden Werkstück das Material des Werkstücks durch anodische Oxidation aufgelöst wird und in den Elektrolyten übergeht. Dadurch ergibt sich ein Materialabtrag, der von den Potentialverhältnissen im Bearbeitungsspalt abhängt. Diese werden wieder durch die Spaltbreite beeinflusst, so dass eine dreidimensionale Form der Arbeitselektrode mit entsprechend unterschiedlichen Abständen der Arbeitselektrode zur zu bearbeitenden Oberfläche zu einem formabhängigen Abtrag führt. Damit lässt sich die Form der Arbeitselektrode bei der bearbeiteten Oberfläche aufprägen bzw. abbilden.

Das elektrochemische Abtragen kann nicht nur kontinuierlich, sondern auch in gepulster Form durchgeführt werden, wobei kein kontinuierlicher Stromfluss eingestellt wird, sondern eine Vielzahl von Strompulsen hintereinander ausgeführt werden. Ein derartiges Verfahren wird auch als PECM ("pulsed electrochemical machining" oder "precise electrochemical machining") bezeichnet.

Typischerweise werden die Arbeitselektroden in sinusförmigem Rhythmus vor- und zurückbewegt. Dabei sollte die Geschwindigkeit beim Entfernen der Elektrode nur so groß gewählt werden, dass keine Kavitationen zwischen der Arbeitselektrode und dem Werkstück entstehen. Kavitationen sollten möglichst vermieden werden, da das Werkstück durch ein lokales Heraustrennen von Metallteilchen beschädigt wird. Diese dann im Spalt befindlichen Metallteilchen können ferner einen Kurzschluss zwischen dem Werkzeug und dem Werkstück verursachen.

Aus der internationalen Patentanmeldung WO 2012/ 152254 A1 ist eine Maschine zur elektrochemischen Metallbearbeitung bekannt, welche ein am Grundkörper linear verschieblich, aber nicht drehbar gelagertes ECM-Modul aufweist. Aus der US-Patentanmeldung US 2008/0272957 ist ferner eine Maschine zur elektrochemischen Bearbeitung von Tandemblisken bekannt, welche ein am Grundkörper linear drehbares, aber nicht linear verschiebliches ECM-Modul aufweist. Diese Anmeldung zeigt die Merkmale des Oberbegriffs des Anspruchs 1.

Eine Aufgabe der vorliegenden Erfindung ist es, die elektrochemische Bearbeitung eines Werkstücks, insbesondere eines Gasturbinenbauteils zu verbessern.

Die Aufgabe wird durch eine Anlage mit den Merkmalen des Anspruchs 1 gelöst. Ansprüche 12, 13 stellen ein Verfahren zur elektrochemischen Bearbeitung eines Werkstücks mittels einer solchen Anlage unter Schutz. Vorteilhafte Weiterbildungen sind Gegenstand der Unteransprüche.

Ein Aspekt der vorliegenden Erfindung betrifft eine Anlage mit den Merkmalen des Anspruchs 1.

Unter dem Begriff "bewegbar" ist jede Bewegungsform zu verstehen. Dazu gehören insbesondere lineare, kreisförmige, parallel- und/oder ellipsenförmige Bahnen. Auch sind überlagerte Bewegungen dieser verschiedenförmigen Bahnen vorstellbar.

Die Spielfreiheit hat den Vorteil, dass die Bewegungen des Antriebs unmittelbar auf das Werkzeug übertragen werden. Damit folgt das Werkzeug im Wesentlichen verzögerungsfrei der Bewegung des Antriebs. Als Antrieb können insbesondere Excenter-Torquemotoren, Spindelmotoren und/oder Kolbenmotoren verwendet werden. Der Motor lässt in einer Ausführung eine stufenlose Zustellung zu und ermöglicht eine Bewegungsoszillation der Elektroden (Drehrichtungsänderungen pro Sekunde) von vorzugsweise wenigstens 10 Hz und/oder höchstens 60 Hz.

In einer Ausführung ist bzw. wird das Werkzeug, insbesondere lös- bzw. austauschbar oder dauerhaft bzw. stationär, an einem, vorzugsweise mit dem Gestell und/oder Antrieb mechanisch verbundenen, Werkzeughalter befestigbar, insbesondere befestigt. Dies hat den Vorteil, dass das Werkzeug schneller ausgetauscht werden kann ohne dabei den Antriebsmechanismus abmontieren zu müssen, der dann in bevorzugter Weise am Werkzeughalter greift bzw. angelenkt ist.

In einer Ausführung weist der Antrieb eine Antriebsachse auf, von der eine Schwenkachse beabstandet angeordnet ist, wobei ein Antriebsarm an der Schwenkachse angelenkt ist. Dies hat den Vorteil, dass mit einer solchen Hebelkonfiguration, sehr hohe Kräfte auf das Werkzeug aufgetragen werden können. Vorzugsweise verlaufen die Antriebsachse und die Schwenkachse parallel zu einander. Dabei kann eine Excenterwelle auf der Antriebsachse angeordnet sein, wobei die zweite Achse der Excenterwelle die Schwenkachse wiederspiegelt. In einer Ausführung ist, insbesondere bei einem Antrieb in Form eines Excenter-Torquemotors, die Excenterwelle integral mit einer Abtriebswelle des Antriebs ausgebildet, insbesondere hergestellt.

In einer Ausführung ist der Antriebsarm am Werkzeug und/oder am Werkzeughalter angelenkt. Dies hat den Vorteil, mit wenigen mechanischen Gliedern einen Direktantrieb zu verwirklichen. Dabei kann das Gelenk zwischen dem Antriebsarm und dem Werkzeug bzw. dem Werkzeughalter als Festkörpergelenk ausgelegt sein. Ein Festkörpergelenk kann in einer Ausführung allgemein Federblechpakete aufweisen, die hinter-bzw. aufeinander angeordnet sind, insbesondere hieraus bestehen.

In einer Ausführung umfasst das Modul mindestens eine Wippe, die die mechanische Verbindung zwischen dem Antrieb und dem Werkzeug oder zwischen dem Antrieb und dem Werkzeughalter vermittelt. Dies hat den Vorteil, dass die Antriebskraft des Antriebs umgelenkt werden kann. Damit kann eine sehr kompakte Bauweise der Vorrichtung realisiert werden.

In einer Weiterbildung ist an der Wippe ein Schubarm angelenkt, der am Werkzeug und/oder am Werkzeughalter angelenkt ist. Dabei können sowohl das Gelenk zwischen dem Schubarm und dem Werkzeug bzw. dem Werkzeughalter als auch das Gelenk zwischen der Wippe und Schubarm als Festkörpergelenk ausgelegt sein. Insbesondere kann der Schubarm ein, insbesondere rechteckförmiges, Schubblech aufweisen, insbesondere sein. Das Schubblech kann aus mehreren dünnen Einzelblechen aufgebaut sein, die vorzugsweise hinter- bzw. aufeinander angeordnet sind.

In einer Weiterbildung ist an der Wippe der Antriebsarm und/oder ein Lagerungsarm angelenkt, der am Gestell angelenkt ist. Dabei kann das Gelenk zwischen dem Antriebsarm und der Wippe als Festkörpergelenk ausgelegt sein. Zusätzlich oder alternativ dazu können sowohl das Gelenk zwischen der Wippe und dem Lagerungsarm als auch das Gelenk zwischen dem Lagerungsarm und dem Gestell als Festkörpergelenk ausgelegt sein.

Ein Festkörpergelenk kann in einer Ausführung allgemein, insbesondere dünne, Federblechpakete aufweisen, die vorzugsweise hinter- bzw. aufeinander angeordnet sind, insbesondere hieraus bestehen. Gleichermaßen kann es ein dickes Blech aufweisen, insbesondere hieraus bestehen. Über die Dicke und/oder über die Anzahl der Bleche kann eine gewünschte Steifigkeit eingestellt werden.

Dabei kann das eine Ende des Lagerungsarmes an einem Ende der Wippe angeordnet sein und der Schubarm und der Antriebsarm können dann über den restlichen Teil der Wippe angeordnet sein, so dass ein einseitiger Hebel realisert wird.

In einer Ausführung ist das eine Ende des Lagerungsarms an der Wippe zwischen dem Schubarm und dem Antriebsarm angeordnet. Dabei stellt dann der eine Arm der Wippe, an dem der Antriebarm angelenkt ist, den Kraftarm dar, da an diesem Arm der Wippe die bewegende Kraft anliegt. Dann stellt der andere Arm der Wippe, an dem der Schubarm angelenkt ist, den Lastarm dar, da an diesem anderen Arm der Wippe die zu bewegende Last (Werkzeug(halter)) anliegt. Mit einem solchen einseitigen Hebel lassen sich in einer Ausführung auf den Lastarm sehr hohe Kräfte übertragen.

In einer Ausführung ist das Werkzeug und/oder der Werkzeughalter über mindestens einen ersten Schwenkarm mit dem Gestell mechanisch verbunden. Dies hat den Vorteil, dass das Werkzeug direkt oder indirekt über den Werkzeughalter am Gestell geführt wird.

In einer Weiterbildung ist zwischen dem Werkzeug und dem Gestell oder zwischen dem Werkzeughalter und dem Gestell zusätzlich zu dem ersten ein zweiter Schwenkarm angeordnet ist. Dies bietet den Vorteil, dass das Werkzeug direkt oder indirekt über den Werkzeughalter am Gestell eine genauere und reproduzierbare Führung aufweist. Verlaufen die beiden Schwenkarme zudem noch parallel zueinander und sind voneinander beabstandet, dann kann damit sehr einfach eine Parallelschwinge umgesetzt werden. Eine solche Parallelschwinge bietet den Vorteil, dass sich der Werkzeughalter nur in einer Ebene bewegen kann. Damit lässt sich der Werkzeughalter genau und reproduzierbar an die erforderliche Stelle positionieren.

Ferner kann sowohl das Gelenk zwischen dem Schubarm und dem Werkzeug bzw. dem Werkzeughalter als auch das Gelenk zwischen der Wippe und dem Schubarm als Festkörpergelenk ausgelegt sein.

In einer Ausführung umfasst das Modul derart ein zweites Werkzeug, einen zweiten Werkzeughalter, eine zweite Wippe und/oder einen zweiten Antrieb, dass das zweite Werkzeug auf das erste Werkzeug und/oder auf das Werkstück zu bewegbar ist. Dies bietet den Vorteil, insbesondere bei Gasturbinenbauteilen wie Schaufeln, dass das Werkstück von zwei Seiten zeitgleich bearbeitet werden kann. Damit wird die Bearbeitungszeit halbiert. Außerdem kann bei zwei oszillierenden Werkzeugen (Arbeitselektroden), die zeitgleich das Werkstück von der einen und von der anderen Seite anfahren, die Werkstückverformung minimiert werden, d.h. das Werkstück wird von beiden Seiten synchron bearbeitet. Insbesondere heben sich die Spannungen am Werkstück, die infolge des Elektrolytdrucks zu beiden Seiten generiert werden, auf. Eine asynchrone Bearbeitung der Seiten des Werkstücks ist denkbar. Damit wird in einer Ausführung abwechselnd die eine Seite, dann die andere Seite des Werkstücks bearbeitet.

Vorzugsweise wird bzw. ist das zweite Werkzeug, die zweite Wippe und der zweite Antrieb spiegelsymmetrisch zum ersten Werkzeug, zur ersten Wippe und zum ersten Antrieb am Gestell angeordnet.

Ein Aspekt der vorliegenden Erfindung betrifft ein Verfahren zur elektrochemischen Bearbeitung eines Werkstücks mit einer Anlage gemäß Anspruch 1. In einer Ausführung wird zuerst in Schritt a.) ein Werkstück bereitgestellt, dann wird in Schritt b.) mindestens ein Werkzeug mit mindestens einem ersten Geschwindigkeitsverlauf auf das Werkstück zu bewegt. Anschließend wird in Schritt c.) das Werkstück elektrochemisch bearbeitet. Nach der Bearbeitung wird in Schritt d.) das Werkstück mit einem zweiten Geschwindigkeitsverlauf wegbewegt.

In einer Ausführung ist der erste Geschwindigkeitsverlauf unabhängig vom zweiten Geschwindigkeitsverlauf.

Dies ist erfüllt, wenn der absolute Betrag des ersten Geschwindigkeitsverlaufs ungleich dem absoluten Betrag des zweiten Geschwindigkeitsverlaufs ist. Der erste Geschwindigkeitsverlauf kann beispielsweise mittels einer Funktion v₁(t') wiedergegeben werden. Der zweite Geschwindigkeitsverlauf kann beispielsweise mittels einer Funktion v₂(t") wiedergegeben werden. Dabei gilt: |v₁(t')| ≠ |v₂(t")|, wobei t' für den Zeitraum steht, bei dem das Werkzeug an das Werkstück herangefahren wird, und t" für den Zeitraum steht, bei dem das Werkzeug vom Werkstück entfernt wird.

Bei reinen sinusförmigen Bewegungen des Werkzeugs wird diese Bedingung nicht erfüllt, da der Betrag des Geschwindigkeitsverlaufs im Zeitraum t' (links vom Minimum) gleich ist zum Betrag des Geschwindigkeitsverlaufs im Zeitraum t" (rechts vom Minimum). Im Minimum ist die Geschwindigkeit für einen Bruchteil einer Sekunde Null. Dabei ist zu diesem Zeitpunkt der Abstand zwischen Werkzeug und Werkstück am geringsten. Durch die Funktion des absoluten Betrags wird die Geschwindigkeitskurve im Zeitraum t' an die durch das Maximum gehende vertikale Achse gespiegelt und deckt sich mit der Geschwindigkeitskurve im Zeitraum t".

In einer Ausführung verläuft der zweite Geschwindigkeitsverlauf flacher als der erste Geschwindigkeitsverlauf. Dies bietet den Vorteil, dass beim Heranfahren des Werkzeugs an das Werkstück höhere Geschwindigkeiten gefahren werden können als beim Herausfahren des Werkzeugs vom Werkstück. Damit lassen sich insbesondere beim Herausfahren Kavitationen vermeiden und dennoch kann mit sehr hoher Geschwindigkeit an das Werkstück herangefahren werden. Die bietet den Vorteil, dass der Spüldruck beim Heranfahren der Elektrode zusätzlich erhöht werden kann.

In einer Ausführung bleibt in Schritt c.) die Position des Werkzeugs unverändert. Dies hat den Vorteil, dass die Position des Werkzeugs während des Abtrags bekannt ist und damit definierte Spannungen und Ströme angelegt werden können. Damit wird die Oberflächengüte stark verbessert. Oder aber der Spalt zwischen Werkzeug und Werkstück bleibt im Wesentlichen konstant. Dies bedeutet, dass das Werkzeug in Abhängigkeit der Abtragrate an das Werkstück nachgeführt wird. Dies hätte den Vorteil konstante Abtragraten zu erhalten.

In einer Ausführung wird in Schritt c.) ein elektrisches Potential zwischen Werkzeug und Werkstück mit einer Frequenz von 100 Hz bis 3 kHz angelegt. Dies bedeutet, dass bei 100 Hertz das elektrische Potential hundertmal in der Sekunde an- und abgestellt wird. Vorzugsweise werden rechteckförmige elektrische Potentiale angelegt.

In einer weiteren vorteilhaften Ausgestaltung der Erfindung werden die Schritte a.) bis d.) mit einer Frequenz (Drehrichtungsänderungen pro Sekunde) von wenigstens 10 Hz und/oder höchstes 60Hz ausgeführt. Bei 10 Hertz bedeutet dies, dass das Werkzeug zehnmal in der Sekunde vor- und zurückbewegt wird, damit in den Spalt zwischen dem Werkzeug und dem Werkstück frisches und unverbrauchter Elektrolyt nachfliesen kann. Damit kann die Abtragrate deutlich erhöht werden.

Das ECM-Modul zur elektrochemischen Bearbeitung eines Werkstücks umfasst mindestens eine Elektrode, ein Gestell, mit dem die Elektrode mechanisch verbunden ist, und mindestens einen Antrieb zum Bewegen der Elektrode, der am Gestell befestigt ist, wobei der Antrieb insbesondere derart mit der Elektrode mechanisch verbunden ist, dass dieses spielfrei bewegbar ist.

In einer Ausführung ist das Werkzeug an einem Werkzeughalter befestigt. Zusätzlich oder alternativ weist der Antrieb eine Antriebsachse auf, von der eine Schwenkachse beabstandet angeordnet ist, wobei ein Antriebsarm an der Schwenkachse angelenkt ist. In einer Ausführung ist der Antriebsarm am Werkzeug und/oder am Werkzeughalter angelenkt. Zusätzlich oder alternativ umfasst das Modul mindestens eine Wippe, die die mechanische Verbindung zwischen dem Antrieb und dem Werkzeug oder zwischen dem Antrieb und dem Werkzeughalter übernimmt. In einer Ausführung ist an der Wippe ein Schubarm angelenkt, der am Werkzeug und/oder am Werkzeughalter angelenkt ist. In einer Weiterbildung ist an der Wippe der Antriebsarm und/oder ein Lagerungsarm angelenkt. In einer Ausführung ist das Werkzeug und/oder Werkzeughalter über mindestens einen Schwenkarm mit dem Gestell mechanisch verbunden. In einer Weiterbildung ist zwischen dem Werkzeug und dem Gestell oder zwischen dem Werkzeughalter und dem Gestell ein zweiter Schwenkarm angeordnet. In einer Ausführung umfasst das Modul derart ein zweites Werkzeug, einen zweiten Werkzeughalter, eine zweite Wippe und/oder einen zweiten Antrieb, dass das zweite Werkzeug auf das erste Werkzeug zu bewegbar ist.

In einer Ausführung umfasst das Verfahren zur elektrochemischen Bearbeitung eines Werkstücks die Schritte
a.) Bereitstellen eines Werkstücks,
b.) Verschieben mindestens eines Werkzeugs auf das Werkstück mit einem ersten Geschwindigkeitsverlauf,
c.) elektrochemisches Bearbeiten des Werkstücks,
d.) Entfernen des Werkzeugs (10; 60, 160) vom Werkstück (2; 52) mit einem zweiten Geschwindigkeitsverlauf.

In einer Ausführung ist der erste Geschwindigkeitsverlauf unabhängig vom zweiten Geschwindigkeitsverlauf. Zusätzlich oder alternativ bleibt in einer Ausführung in Schritt c.) die Position des Werkzeugs unverändert oder in Schritt c.) der Spalt zwischen Werkzeug und Werkstück im Wesentlichen konstant. In einer Ausführung liegt während der elektrochemischen Bearbeitung ein gepulster Strom oder eine gepulste Spannung zwischen Werkzeug und Werkstück mit einer Frequenz von 100 Hz bis 3 kHz an. In einer Ausführung erfolgen die Schritte a.) bis d.) mit einer Frequenz bis zu 50Hz.

Die Anlage weist eine, insbesondere umgebungsfeste, Basis und eine oder mehrere Arbeitsstationen zur elektrochemischen Bearbeitung eines Werkstücks auf.

In einer Ausführung weist die Anlage wenigstens eine vorgeschaltete Arbeitsstation zur, insbesondere elektrochemischen oder generativen, Herstellung einer ersten Außenkontur des Werkstücks und wenigstens eine nachgeschaltete weitere Arbeitsstation zur elektrochemischen Herstellung einer zweiten Außenkontur des Werkstücks auf, wobei die erste gegenüber der zweiten Außenkontur ein Aufmaß aufweist. Insbesondere kann eine nachgeschaltete Arbeitsstation zur elektrochemischen gepulsten bzw. PECM-Bearbeitung des Werkstücks vorgesehen bzw. eingerichtet und in Serie zu der bzw. den vorgeschaltete(n) Arbeitsstation(en) angeordnet sein. Eine vorgeschaltete Arbeitsstation kann insbesondere zur elektrochemischen kontinuierlichen bzw. ECM-Bearbeitung des Werkstücks vorgesehen bzw. eingerichtet sein. In einer Ausführung sind zwei oder mehr Arbeitsstationen zur ECM- oder PECM-Bearbeitung in Serie angeordnet, um unterschiedliche Bereiche des Werkstücks zu bearbeiten. Vorteilhaft kann so eine einzelne Arbeitsstation kompakter ausgebildet sein.

Wenigstens eine der Arbeitsstationen weist ein Modul zur elektrochemischen Bearbeitung des Werkstücks auf, das ein Gestell und eine Elektrodenanordnung mit wenigstens einer Elektrode, die mit dem Gestell mechanisch verbunden ist, und einen Antrieb zum Bewegen dieser Elektrode, der an dem Gestell befestigt ist, umfasst.

In einer Ausführung weist die Elektrodenanordnung zwei Elektroden, die mit dem Gestell mechanisch verbunden sind, und zwei Antriebe zum gegensinnigen Bewegen dieser Elektrode auf, die an dem Gestell befestigt sind. Das Modul kann insbesondere ein vor- und/oder nachstehend beschriebenes Modul sein.

Die Anlage weist eine Werkstückhalterung zur lösbaren Befestigung des Werkstücks und eine Positioniervorrichtung zum Verschieben der Werkstückhalterung und des Moduls relativ zueinander auf. Dabei verschiebt die Positioniervorrichtung sowohl die Werkstückhalterung als auch das Modul bzw. ist hierzu eingerichtet bzw. vorgesehen.

Entsprechend weist ein Verfahren zur elektrochemischen Bearbeitung eines Werkstücks mittels einer hier beschriebenen Anlage die Schritte auf:
lösbares Befestigen des Werkstücks an der Werkstückhalterung, und
Verschieben der Werkstückhalterung und/oder des Moduls relativ zueinander.

Hierdurch kann in einer Ausführung das Modul nacheinander und/oder wahlweise unterschiedliche Bereiche des Werkstücks bearbeiten und dementsprechend kompakter ausgebildet werden.

Die Positioniervorrichtung weist einen Grundkörper auf, an dem die Werkstückhalterung und das Modul angeordnet sind. Die Werkstückhalterung ist insbesondere durch einen Stellantrieb, insbesondere um eine Werkstückhalterungsdrehachse drehbar an dem Grundkörper gelagert. Zusätzlich oder alternativ ist in einer Weiterbildung das ECM-Modul, insbesondere durch einen Stellantrieb, um eine Moduldrehachse drehbar an dem Grundkörper gelagert, die in einer Ausführung gegen die Werkstückhalterungsdrehachse geneigt ist, insbesondere mit dieser einen Winkel zwischen 80° und 100° einschließt. Hierdurch kann in einer Ausführung das Modul nacheinander und/oder wahlweise unterschiedliche Bereiche des Werkstücks bearbeiten und dementsprechend kompakter ausgebildet werden

Die Werkstückhalterung ist, insbesondere vertikal oder horizontal, in einer Werkstückhalterungslinearachse linear verschieblich an dem Grundkörper gelagert. Zusätzlich ist, insbesondere durch einen Stellantrieb, das Modul, insbesondere vertikal oder horizontal, in einer Modullinearachse linear verschieblich an dem Grundkörper gelagert. Die Werkstückhalterungs- und/oder Modullinearachse schließt in einer Ausführung mit der Werkstückhalterungs- und/oder Moduldrehachse einen Winkel zwischen 80° und 100° ein.

Hierdurch kann in einer Ausführung das Modul nacheinander und/oder wahlweise unterschiedliche Bereiche des Werkstücks präzise bearbeiten und kompakter ausgebildet werden. In einer Ausführung weist die Werkstückhalterung ein Spannfutter, insbesondere ein Nullpunktbefestigungssystem, zur lösbaren Befestigung des Werkstücks auf, das lösbar mit dem Grundkörper verbunden ist bzw. wird. Dadurch kann in einer Ausführung vorteilhaft das Werkzeug zunächst an dem, insbesondere horizontal angeordneten, Spannfutter befestigt und dieses dann seinerseits lösbar, insbesondere dreh- und/oder linear verschiebbar, an dem Grundköper oder einem Werkstückhalterungsflansch befestigt werden, der seinerseits dreh- und/oder linear verschiebbar an dem Grundköper gelagert ist. Vorteilhaft können so schwerkraftbedingte Asymmetrien beim Befestigen des Werkstückes reduziert werden.

Zusätzlich oder alternativ zu der linear verschieblich an dem Grundkörper gelagerten Werkzeugaufnahme kann die Positioniervorrichtung einen Roboter mit wenigstens zwei, insbesondere wenigstens sechs, aktuierten Drehgelenken zum Verschieben der Werkstückhalterung relativ zu dem Modul aufweisen. Hierdurch kann das Werkstück sehr variabel und präzise relativ zu dem Modul positioniert werden, um durch dieses bearbeitet zu werden.

Ein Roboter kann zusätzlich oder alternativ zum Verschieben der Werkstückhalterung relativ zu dem Modul in der Arbeitsstation auch dazu verwendet werden bzw. eingerichtet bzw. vorgesehen sein, das Werkstück aus einer vorgeschalteten weiteren Arbeitsstation und/oder einem Puffer in die Arbeitsstation, insbesondere an deren Werkstückhalterung, zu transferieren bzw. transportieren und/oder nach der Bearbeitung in der Arbeitsstation in eine weitere nachgeschaltete Arbeitsstation und/oder einen Puffer der Anlage zu transferieren bzw. transportieren. Entsprechend weist die Anlage in einer Ausführung einen oder mehrere Puffer auf, um Werkstücke zwischen der Bearbeitung in verschiedenen, insbesondere in Serie geschalteten, Arbeitsstationen der Anlage zwischenzulagern und so unterschiedliche Taktzeiten, Ausfälle, Werkzeugwechsel oder dergleichen wenigstens teilweise zu kompensieren.

Zusätzlich oder alternativ zu einem solchen Roboter kann die Anlage auch einen, insbesondere mobilen oder ortsfesten, Kran mit einer Hubvorrichtung aufweisen, um das Werkstück aus einer vorgeschalteten weiteren Arbeitsstation und/oder einem Puffer in die Arbeitsstation, insbesondere an deren Werkstückhalterung, zu transferieren bzw. transportieren und/oder nach der Bearbeitung in der Arbeitsstation in eine weitere nachgeschaltete Arbeitsstation und/oder einen Puffer der Anlage zu transferieren bzw. transportieren. Während ein Roboter vorteilhaft besonders flexibel ist, kann ein Kran in einer Ausführung kostengünstiger sein und/oder einen größeren Verfahrbereich aufweisen und entsprechend mehr Arbeitsstationen bedienen. In einer Ausführung ist der Kran zwischen der Arbeitsstation und wenigstens einer weiteren Arbeitsstation und/oder wenigstens einem Puffer, insbesondere an einer Decke oder einem Gerüst der Anlage, verfahrbar.

In einer Ausführung weist die Anlage bzw. Arbeitsstation ein Schwenklager zum Verschwenken der Werkstückhalterung relativ zu der Basis auf, insbesondere in eine vertikale und/oder horizontale Lage. Entsprechend ist in einer Ausführung die Werkstückhalterung, insbesondere ein Teil eines hier beschriebenen Grundkörpers, an dem die Werkstückhalterung oder ihr Werkstückhalterungsflansch angeordnet ist, relativ zu der Basis, insbesondere in eine vertikale und/oder horizontale Lage, verschwenkbar angelenkt. Hierdurch kann die (De)Montage bzw. Befestigung des Werkstücks an der Werkstückhalterung und/oder eines Spannfutters der Werkstückhalterung verbessert werden.

In einer Ausführung weist die Anlage ein Messmittel zur Vermessung des Werkstücks auf. Hierdurch kann dessen Bearbeitung kontrolliert und in einer Weiterbildung vorteilhaft geregelt, insbesondere nachjustiert werden.

Das Messmittel ist in einer Ausführung ein optisches Messmittel, welches zur Bestrahlung des Werkstücks mit sichtbarem oder unsichtbarem Licht und/oder zum Empfang von auf das Werkstück aufgestrahltem sichtbarem oder unsichtbarem Licht eingerichtet sein und in einer Weiterbildung eine Lichtschranke, einen Laser und/oder eine Kamera aufweisen kann. In einer Ausführung ist das Messmittel ein taktiles Messmittel, welches zum Abtasten des Werkstücks eingerichtet sein kann.

Das Messmittel vermisst in einer Ausführung das an der Werkstückhalterung der Arbeitsstation befestigte Werkstück bzw. ist zu dessen Vermessung vorgesehen bzw. eingerichtet. Hierzu kann es, insbesondere beweglich, an der Arbeitsstation gelagert sein, insbesondere durch einen Roboter oder an einem hier beschriebenen Grundkörper. Dadurch kann die Vermessung vorteilhaft in situ erfolgen. In einer anderen Ausführung ist das Messmittel der Arbeitsstation nachgelagert und vermisst entsprechend das von der Werkstückhalterung der Arbeitsstation gelöste Werkstück bzw. ist zu dessen Vermessung vorgesehen bzw. eingerichtet. Hierdurch kann die Arbeitsstation kompakter ausgebildet und/oder das Messmittel zum Vermessen des Werkstücks nach einer Bearbeitung in verschiedenen Arbeitsstationen der Anlage verwendet werden.

Erfindungsgemäß weist das Modul zur elektrochemischen Bearbeitung eines Werkstücks ein Gestell und eine Elektrodenanordnung mit wenigstens einer Elektrode, die einen ersten Oberflächenarbeitsbereich und einen hiervon verschiedenen zweiten Oberflächenarbeitsbereich aufweist und mit dem Gestell mechanisch verbunden ist, und einem Antrieb zum Bewegen dieser Elektrode auf, der an dem Gestell befestigt ist.

Nach einem Aspekt weist das Modul einen ersten Betriebsmodus, in dem nur der erste Oberflächenarbeitsbereich zur elektrochemischen Bearbeitung des Werkstücks mit Spannung beaufschlagt, und einen zweiten Betriebsmodus auf, in dem zusätzlich oder alternativ zu dem ersten Oberflächenarbeitsbereich (auch bzw. nur) der zweite Oberflächenarbeitsbereich zur elektrochemischen Bearbeitung des Werkstücks mit Spannung beaufschlagt ist.

Entsprechend wird nach einem Aspekt der vorliegenden Erfindung wahlweise, insbesondere zeitlich nacheinander, in dem ersten Betriebsmodus eines solchen Moduls nur der erste Oberflächenarbeitsbereich zur elektrochemischen Bearbeitung des Werkstücks mit Spannung beaufschlagt, und in dem zweiten Betriebsmodus zusätzlich oder alternativ der zweite Oberflächenarbeitsbereich zur elektrochemischen Bearbeitung des Werkstücks mit Spannung beaufschlagt.

Durch die wahlweise Beaufschlagung unterschiedlicher Oberflächenarbeitsbereiche einer Elektrode mit Spannung zur elektrochemischen Bearbeitung eines Werkstücks können in einer Ausführung insbesondere Hinterschneidungen des Werkstücks einfach und/oder präzise bearbeitet, insbesondere hergestellt, werden.

Zusätzlich oder alternativ zu einem solchen ersten und zweiten Oberflächenarbeitsbereich und Modus sind nach einem Aspekt bei einem vor- und/oder nachstehend beschriebenen Modul die Elektrode und das Gestell über einen Werkzeughalter mechanisch miteinander verbunden, der über zwei Schwenkarme unterschiedlicher Länge mit dem Gestell mechanisch verbunden ist.

Auch hierdurch können in einer Ausführung insbesondere Hinterschneidungen des Werkstücks einfach und/oder präzise bearbeitet, insbesondere hergestellt, werden.

In einer Ausführung weist der Antrieb eines hier beschriebenen Moduls eine Wasserkühlung auf. Zusätzlich oder alternativ weist in einer Ausführung der Antrieb eines hier beschriebenen Moduls einen Elektromotor auf, dessen Abtriebswelle als Excenterwelle mit einer Antriebsachse und einer parallel versetzten Schwenkachse ausgebildet ist, insbesondere einen an anderer Stelle genannten Excenter-Torquemotor. In einer Weiterbildung ist die Excenterwelle in einem oder mehreren Keramiklagern drehbar gelagert. Hierdurch kann insbesondere eine gegen den Elektrolyten zur elektrochemischen Bearbeitung widerstandsfähige Lagerung zur Verfügung gestellt werden. Zusätzlich oder alternativ ist die Excenterwelle mit einem magnetisch durch einen Stator des Elektromotors beaufschlagten Rotor des Elektromotors verschraubt. Hierdurch kann eine besonders präzise und/oder zuverlässige Verbindung hergestellt werden.

Weitere vorteilhafte Ausgestaltungen der Erfindung sind in den Unteransprüchen wiedergegeben.

Im Weiteren werden anhand der teilweise schematisierten Zeichnungen bevorzugte Ausführungsbeispiele zum Verständnis der Erfindung näher beschrieben. Dabei zeigen:
- Figuren 1A, B:: ein Modul nach einer Ausführung;
- Figur 2:: ein Modul nach einer weiteren Ausführung;
- Figur 3:: einen zeitlichen Bewegungsablauf eines Werkzeugs;
- Figur 4:: einen anderen zeitlichen Bewegungsablauf eines Werkzeugs;
- Figur 5:: eine nicht erfindungsgemäße Anlage mit mehreren Arbeitsstationen;
- Figur 6:: eine Arbeitsstation der Anlage in einer Seit- (links in Fig. 6) und Frontalansicht (rechts in Fig. 6);
- Figur 7:: eine Arbeitsstation einer nicht erfindungsgemäßen Anlage in einer Seit- (oben in Fig. 7) und Draufsicht (unten in Fig. 7);
- Figur 8:: einen Teil eines Moduls nach einer Ausführung;
- Figur 9:: einen Teil eines Moduls nach einer Ausführung; und
- Figur 10:: einen Antrieb eines Moduls nach einer Ausführung.

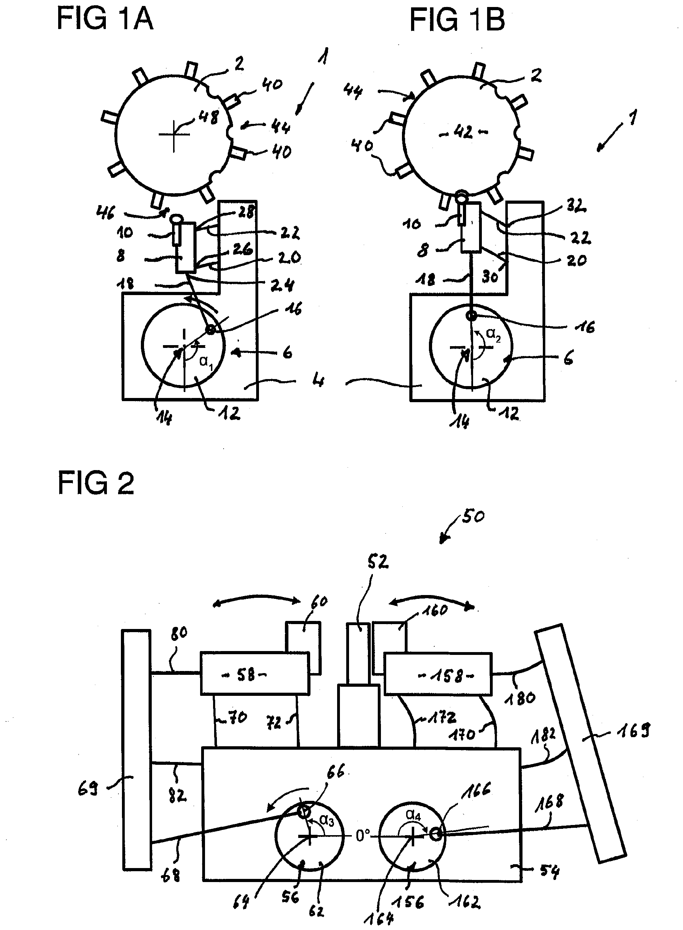

In den Figuren 1A und 1B ist ein ECM-Modul 1 nach einer ersten Ausführungsform abgebildet, die ein Werkstück 2 bearbeitet. Das ECM-Modul 1 umfasst ein Gestell 4, einen am Gestell 4 befestigten Antrieb 6 und einen Werkzeughalter 8, an dem ein Werkzeug 10 befestigt ist. Der Antrieb 6 umfasst eine Scheibe 12, die an einer Antriebsachse 14 befestigt ist und eine Schwenkachse 16 aufweist. Die Scheibe 12 kann auch lediglich ein Stab sein, der an der Antriebsachse 14 befestigt ist und entsprechend die Schwenkachse 16 aufweist. Andere Formen sind denkbar. An dieser Schwenkachse 16 ist ein Ende eines Antriebsarms 18 gelagert. Das andere Ende des Antriebsarms 18 ist an einem Ende des Werkzeughalters 8 angelenkt. Der Werkzeughalter 8 ist seitlich über zwei Schwenkarme 20 und 22 am Gestell 4 befestigt. Die beiden Schwenkarme 20 und 22 bilden eine sogenannte Parallelschwinge. Am anderen Ende des Werkzeughalters 8 ist oben das Werkzeug 10 (hier eine Elektrode) befestigt.

Vorzugsweise ist das erste Gelenk 24 zwischen dem Werkzeughalter 8 und dem Antriebsarm 18 als Festkörpergelenk ausgelegt. Vorzugsweise ist das zweite Gelenk 26 zwischen dem ersten Schwenkarm 20 und dem Werkzeughalter 8 als Festkörpergelenk ausgelegt. Vorzugsweise ist das dritte Gelenk 28 zwischen dem zweiten Schwenkarm 22 und dem Werkzeughalter 8 als Festkörpergelenk ausgelegt. Vorzugsweise ist das vierte Gelenk 30 zwischen dem ersten Schwenkarm 20 und dem Gestell 4 als Festkörpergelenk ausgelegt. Vorzugsweise ist das fünfte Gelenk 32 zwischen dem zweiten Schwenkarm 22 und dem Gestell 4 als Festkörpergelenk ausgelegt.

In den Figuren 1A und 1B werden vorzugsweise die Tranchen (Ringraum) von Blisken gefertigt. Unter einer Tranche ist die Bearbeitung der Schaufelzwischenräume zu verstehen. Die Figuren 1A und 1B unterscheiden sich lediglich darin, dass der Abstand zwischen der Elektrode 10 und dem Werkstück 2 in Figur 1A am größten ist und der Abstand zwischen der Elektrode 10 und dem Werkstück 1 in Figur 1B am kleinsten ist.

Im Folgenden wird die Arbeitsweise des Moduls 1 beschrieben. Über dem Modul 1 ist das Werkstück 2 (hier eine sogenannte Blisk) angeordnet. Die Blisk 2 umfasst mehrere Schaufeln 40, die an einer Schaufelscheibe 42 angeformt sind. Es kann sich dabei auch um einen Ring handeln. Zwischen den Schaufeln 40 sind die Schaufelzwischenräume 44 angeordnet. In der Figur 1A sind bereits 3 Schaufelzwischenräume 44 und die Mantelfläche der Schaufelscheibe 42 elektrochemisch bearbeitet worden. Im Folgenden wird nun beschrieben wie der vierte Schaufelzwischenraum 46 mittels des Moduls bearbeitet wird. Dazu wurde im Vorfeld die Schaufelscheibe 42 um die Rotationsachse 48 in Gegenuhrzeigersinn soweit gedreht bis der vierte Schaufelzwischenraum 46 genau über der Elektrode 10 angeordnet ist. Hier wird eine vertikale Anordnung aufgezeigt, es kann aber auch jede beliebige Anordnung eingenommen werden. Vorzugsweise auch horizontal. Nach der Positionierung des Zwischenraums 44 über der Elektrode 10 wird der Antrieb 6 eingeschaltet. Vor der Inbetriebnahme des Antriebs 6 beträgt der Winkel α₁ zwischen der Schwenkachse 16 und der Sechsuhrposition der Scheibe 12 in der Figur 1A ca. 125°. Der Antrieb 6 dreht die Scheibe 12 im Gegenuhrzeigersinn bis der Winkel α ca. 180° beträgt. In dieser Winkelposition der Scheibe 12 kann die maximale Kraft vom Antrieb auf das Werkzeug 10 übertragen werden. Um kleine Abstände zu realisieren und hohe Bearbeitungsfrequenzen zu erreichen beträgt die Winkeldifferenz maximal 20°, d.h. der Winkel α liegt typischerweise zwischen 150° und 170°. Beim Drehen der Scheibe 12 wird der Antriebsarm 18 gegen den Werkzeughalter 8 gedrückt, der seinerseits in einer ellipsenförmigen Bahn nach oben gedrückt wird, so dass die Elektrode 10 in einem gewissen Abstand in die Manteloberfläche der Schaufelscheibe 42 sich einarbeitet, wie in Figur 1B gezeigt ist. Dabei wird kontinuierlich Elektrolyt zugeführt (hier nicht dargestellt). Dies kann über die Elektrode selbst oder über eine zusätzliche Zuführung erfolgen. Während der Bearbeitung der Manteloberfläche wird eine Spannung zwischen der Schaufelscheibe 42 und der Elektrode 10 angelegt. Während des Materialabtrags kann der Antrieb 6 ausgeschaltet sein, so dass sich die Elektrode in einer bestimmten festen Position befindet. Oder aber der Antrieb 6 kann während des Materialabtrags weiterdrehen, wobei der Antrieb 6 sowohl in Gegenuhrzeigersinn als auch in Uhrzeigersinn drehen kann. Damit entfernt sich die Elektrode 10 von der Schaufelscheibe 42. Frisches Elektrolyt kann zugeführt werden und die Elektrode 10 wird wieder an Scheibe 42 angelegt. Dieser Vorgang wiederholt sich solange bis das entsprechende Sollmaß in der Mantelfläche der Schaufelscheibe 42 herausgearbeitet wurde. Dann wird die Elektrode 10 zurückgefahren und die Schaufelscheibe wird um die Rotationsachse 48 weitergedreht. Dann können die noch nicht bearbeiteten Schaufelzwischenräume 44 nacheinander bearbeitet werden.

In der Figur 2 ist eine Ausführungsform eines ECM-Moduls 50 nach einer weiteren Ausführung abgebildet, die eine Schaufel 52 von zwei Seiten bearbeitet. Dies kann zeitgleich oder zeitlich versetzt erfolgen, wie in der Figur 2 abgebildet ist. Die Vorrichtung 50 ist spiegelsymmetrisch aufgebaut, wobei die Spiegelebene vertikal durch die Schaufel 52 verläuft.

Die linke Seite des ECM-Moduls 50 umfasst ein Gestell 54, einen ersten am Gestell 54 befestigten Antrieb 56 und einen ersten Werkzeughalter 58, an dem ein erstes Werkzeug 60 befestigt ist. Der erste Antrieb 56 umfasst eine erste Scheibe 62, die an einer ersten Antriebsachse 64 befestigt ist und eine erste Schwenkachse 66 aufweist. Die erste Scheibe 62 kann auch lediglich ein Stab sein, der an der ersten Antriebsachse 64 befestigt ist und entsprechend die erste Schwenkachse 66 aufweist. An dieser ersten Schwenkachse 66 ist ein Ende eines ersten Antriebsarms 68 gelagert. Das andere Ende des ersten Antriebsarms 68 ist an einem Ende einer ersten Wippe 69 angelenkt. Der erste Werkzeughalter 58 ist unten über einen ersten ersten und einen ersten zweiten Schwenkarm 70 und 72 am Gestell 54 befestigt. Die beiden Schwenkarme 70 und 72 bilden eine sogenannte Parallelschwinge. An einem Ende des ersten Werkzeughalters 58 ist rechts das erste Werkzeug 60 (hier eine Elektrode) befestigt. Die erste Elektrode 60 kann beispielsweise die komplementäre Form der Saugseite der Schaufel 52 aufweisen. Am anderen Ende der Wippe 69 oben ist ein erster Schubarm 80 angelenkt, der am linken Ende des ersten Werkzeughalters 58 angelenkt ist. Zwischen dem ersten Schubarm 80 und dem ersten Antriebsarm 68 ist das erste Ende eines ersten Lagerungsarms 82 an der Wippe 69 angelenkt, wobei das zweite Ende des ersten Lagerungsarms 82 am Gestell 54 angelenkt ist. Jede einzelne Anlenkung kann als Festkörpergelenk ausgelegt sein.

Die rechte Seite des ECM-Moduls 50 umfasst das Gestell 54, einen zweiten am Gestell 54 befestigten Antrieb 156 und einen zweiten Werkzeughalter 158, an dem ein zweites Werkzeug 160 befestigt ist. Der zweite Antrieb 156 umfasst eine zweite Scheibe 162, die an einer zweiten Antriebsachse 164 befestigt ist und eine zweite Schwenkachse 166 aufweist. Die zweite Scheibe 162 kann auch lediglich ein Stab sein, der an der zweiten Antriebsachse 164 befestigt ist und entsprechend die zweite Schwenkachse 166 aufweist. An dieser zweiten Schwenkachse 166 ist ein Ende eines zweiten Antriebsarms 168 gelagert. Das andere Ende des zweiten Antriebsarms 168 ist an einem Ende einer zweiten Wippe 169 angelenkt. Der zweite Werkzeughalter 158 ist unten über einen zweiten ersten und einen zweiten zweiten Schwenkarm 170 und 172 am Gestell 54 befestigt. Die beiden zweiten Schwenkarme 170 und 172 bilden eine sogenannte Parallelschwinge. An einem Ende des zweiten Werkzeughalters 158 ist links das zweite Werkzeug 160 (hier eine Elektrode) befestigt. Die zweite Elektrode 160 kann beispielsweise die komplementäre Form der Druckseite der Schaufel 52 aufweisen. Am anderen Ende der zweiten Wippe 169 oben ist ein zweiter Schubarm 180 angelenkt, der am rechten Ende des zweiten Werkzeughalters 158 angelenkt ist. Zwischen dem zweiten Schubarm 180 und dem zweiten Antriebsarm 168 ist das erste Ende eines zweiten Lagerungsarms 182 an der zweiten Wippe 169 angelenkt, wobei das zweite Ende des zweiten Lagerungsarms 182 am Gestell 54 angelenkt ist. Jede einzelne Anlenkung kann als Festkörpergelenk ausgelegt sein.

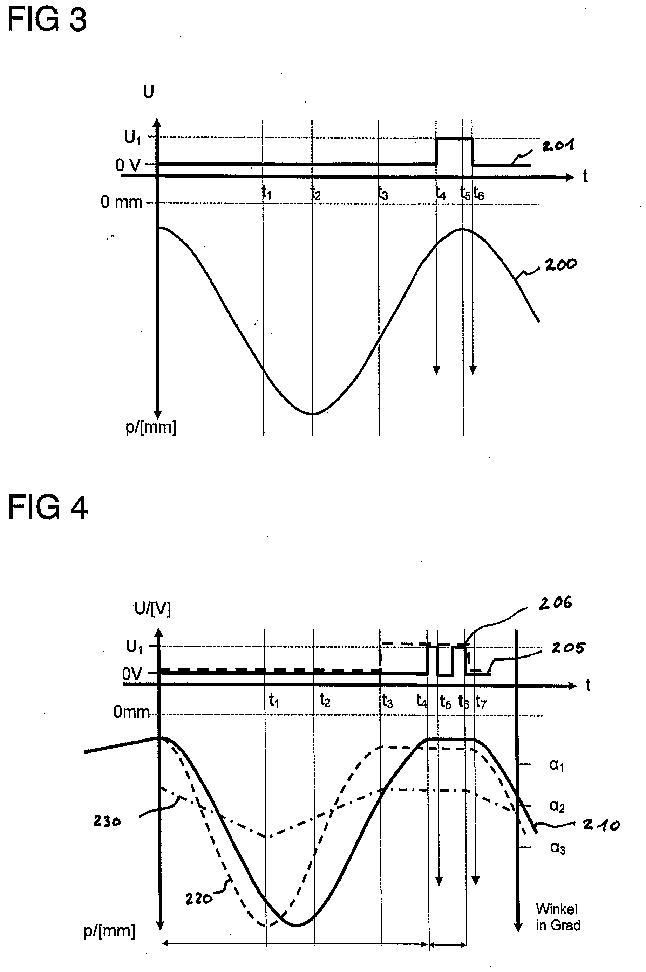

In den Figuren 3 und 4 sind Graphen abgebildet, die aufzeigen, wie das Modul 1 oder 50 der vorliegenden Erfindung betrieben wird.

In der Figur 3 ist im ersten Quadraten die angelegte Spannung über die Zeit als durchgezogene Kurve 201 abgebildet. Darunter ist im vierten Quadraten die Position der Elektrode über die Zeit abgebildet. Wird beispielsweise die linke (erste) Scheibe 62 mit konstanter Winkelgeschwindigkeit in Gegenuhrzeigersinn gedreht, so erfährt die erste Elektrode 60 einen sinusförmigen Positionsverlauf 200. Das Abtragen des Werkstoffs vom Werkstück 52 findet zwischen dem Zeitraum t₄ und t₅ statt, da während dessen eine Spannung zwischen der ersten Elektrode 60 und der Schaufel 52 (Werkstück) angelegt wird. Dabei ist zu erkennen, dass sich die Position der Elektrode 60 während des Abtragzeitraums t_{4,5} (ca. 3ms) ständig ändert.

In der Figur 4 sind im ersten Quadraten mehrere angelegte Spannungen über die Zeit als durchgezogene Kurve 205 und als gestrichelte Kurve 206 abgebildet. Darunter werden im vierten Quadraten die Positionen der Elektrode über die Zeit abgebildet. Diese werden durch die durchgezogene 210 und gestrichelte 220 Kurve dargestellt. Zusätzlich ist der Winkel α der Scheibe eines Antriebs als strichpunktierte Linie 230 abgebildet. In dem Modul 50 aus Figur 2 wird der Winkel α₃ beispielsweise auf der ersten Scheibe 62 zwischen der drei Uhr-Position und der tatsächlichen Position der ersten Schwenkachse 66 gebildet. Auf der linken Seite des Moduls wird der Winkel α₄ auf der zweiten Scheibe 162 zwischen der neun Uhr-Position und der tatsächlichen Lage der zweiten Schwenkachse 166 gebildet.

Die gestrichelte Kurve 220 und die strichpunktierte Kurve 230 gehören zusammen. Anhand der zweiten Scheibe 162 soll die Funktionsweise näher erklärt werden. Der zweite Antrieb 156 dreht die Scheibe 162 im Gegenuhrzeigersinn vom Zeitpunkt 0 (Winkel α₃ = 164°) bis zum Zeitpunkt t₁ (Winkel α₃ = 152°). Dabei wird der zweite Antriebsarm 168 nach links verschoben, so dass sich die zweite Wippe 169 zum zweiten Lagerungsarm 182 biegt bzw. dreht. Dies hat zur Folge, dass das obere Ende der zweiten Wippe 169 nach rechts schwenkt. Dadurch wird der zweite Werkzeughalter 158 samt zweiter Elektrode 160 von der Schaufel 52 entfernt. Dadurch kann durch den größeren Spalt zwischen Elektrode 160 und der Schaufel 52 frisches Elektrolyt nachfließen. Ab dem Zeitpunkt t₁ mit einem Winkel α₃ von 152° wird der zweite Antrieb 156 umgepolt, so dass dieser nun im Uhrzeigersinn bis zu einem Winkel 164° dreht. Dieser Winkel wird zum Zeitpunkt t₃ erreicht. Damit hat die zweite Elektrode den kleinsten Abstand zur Schaufel 52. Vom Zeitpunkt t₃ bis zum Zeitpunkt t₆ verändert die zweite Elektrode ihre Position nicht, da der zweite Antrieb ausgeschaltet ist. In dieser Zeitspanne kann beispielsweise eine Rechteckspannung 206 angelegt werden. Ab dem Zeitpunkt t₆ wird der Antrieb wieder eingeschaltet, so dass sich die zweite Elektrode 160 von Schaufel 52 entfernt. Der Antrieb gestattet eine andere Geschwindigkeit für die Anfahrt als für Abfahrt. Die Anfahrgeschwindigkeit auf die Schaufel kann höher liegen als die Abfahrgeschwindigkeit von Schaufel 52, da beim Anfahren keine Kavitationen entstehen können.

Im Gegensatz zur Figur 3 schwenkt der zweite Antrieb 156 zwischen einem Winkel und einem anderen Winkel hin und her. Hier beträgt der eine Winkel 152° und der andere Winkel 164°. Andere Werte sind denkbar. Allerdings hat es sich in vorteilhafterweise gezeigt, dass die Winkeldifferenz nicht mehr als 20° betragen sollte. In diesem Ausführungsbeispiel sind es konkret 12°. Dadurch wird die zweite Elektrode 160 maximal um 500µm bewegt.

Die durchgezogenen Kurven im ersten 205 und vierten 210 Quadrant gehören zusammen. Im Unterschied zu den gebrochenen Kurven sind auch gepulste Spannungen 205 denkbar. Die zweite Elektrode 160 erreicht den kleinsten Abstand erst im Zeitpunkt t₄. Durch das Pulsen kann die zweite Elektrode 160 in einem kürzeren Zeitabstand (t₇ - t₄ < t₆ - t₃) wieder zurückgefahren werden, da dadurch höhere Abraten erzielbar sind. In diesem Beispiel wird in der Zeitspanne t₀ bis t₄ gespült und in der Zeitspanne t₄ bis t₇ wird Material am Werkstück (z.B. Schaufel) abgetragen.

Ein hier beschriebenes Modul bzw. Verfahren kann insbesondere bei der Tranchenfertigung, insbesondere als letzter Bearbeitungsschritt, von Blisken (oder auch Bling = bladed ring) eingesetzt werden. Unter der Tranchenfertigung versteht man die Bearbeitung der Schaufelzwischenräume. Blisk steht für "blade integrated disk", d. h. dass die Schaufeln direkt an der Scheibe angeformt sind. Das Modul ist leicht skalierbar, d. h. es kann ohne weiteres für verschiedene Abmessungen ausgelegt werden.

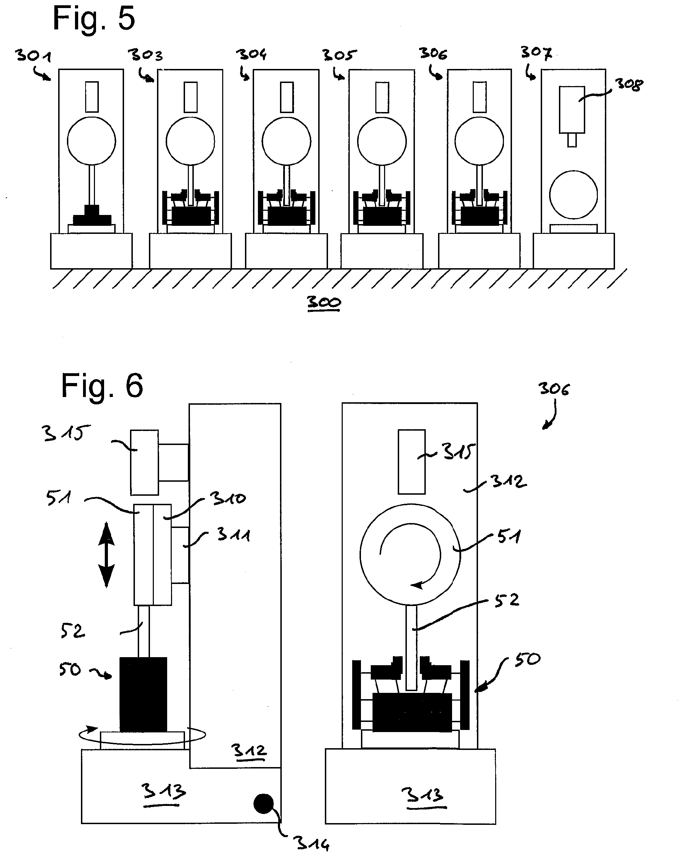

Figur 5 zeigt eine nicht erfindungsgemäße Anlage mit mehreren Arbeitsstationen.

Die Anlage weist eine umgebungsfeste Basis 300, eine vorgeschaltete Arbeitsstation 301 zur elektrochemischen oder generativen Herstellung einer ersten Grobkontur einer Blisk 51, zwei dieser in Serie nachgeschaltete Arbeitsstationen 303, 304 zur ECM-Vorbearbeitung und zwei dieser in Serie nachgeschaltete Arbeitsstationen 305, 306 zur PECM-Endbearbeitung der Blisk zur elektrochemischen Herstellung einer zweiten bzw. End-Außenkontur der Blisk 51 sowie eine dieser nachgelagert Arbeitsstationen 307 mit einem Messmittel 308 zur optischen oder taktilen Vermessung einer von einer Werkstückhalterung der vorgelagerten Arbeitsstationen 301, 303-306 gelösten Blisk 51 auf.

Die Anlage weist in einer Ausführung einen mobilen oder ortsfesten Kran (nicht dargestellt) mit einer Hubvorrichtung auf, um die Blisk aus einer der Arbeitsstationen 301, 303-307 oder einem Puffer (nicht dargestellt) in eine andere der Arbeitsstationen 301, 303-307 oder einen Puffer (nicht dargestellt) zu transportieren. In einer Ausführung weist die Anlage hierzu zusätzlich einen oder mehrere Roboter auf (nicht dargestellt).

Figur 6 zeigt die Arbeitsstation 306 der Anlage in einer Seit- (links in Fig. 6) und Frontalansicht (rechts in Fig. 6). Eine oder mehrere der Arbeitsstationen 303-305 können analog ausgebildet sein.

Die Arbeitsstation 306 weist ein Modul 50 zur elektrochemischen Bearbeitung der Blisk 51, insbesondere deren Schaufeln 52, auf, das vorstehend mit Bezug auf Fig. 2 ausführlich beschrieben wurde und daher hier nur noch schematisiert dargestellt ist.

Die Arbeitsstation 306 weist weiter eine Werkstückhalterung zur lösbaren Befestigung der Blisk 51 und eine Positioniervorrichtung zum Verschieben dieser Werkstückhalterung und des Moduls 50 relativ zueinander auf.

Die Werkstückhalterung weist ein Spannfutter 310, insbesondere ein Nullpunktbefestigungssystem, zur lösbaren Befestigung der Blisk 51auf, das lösbar mit einem Werkstückhalterungsflansch 311 verbunden ist. Dieser Werkstückhalterungsflansch 311 ist seinerseits, wie in Fig. 6 rechts durch einen Bewegungspfeil angedeutet, durch einen Stellantrieb (nicht dargestellt) um eine Werkstückhalterungsdrehachse drehbar und, wie in Fig. 6 links durch einen Bewegungsdoppelpfeil angedeutet, durch einen weiteren Stellantrieb (nicht dargestellt) vertikal in einer Werkstückhalterungslinearachse linear verschieblich an einem Teil 312 eines Grundkörpers gelagert. Die Werkstückhalterungslinearachse schließt mit der Werkstückhalterungsdrehachse einen Winkel von 90° ein.

Zusätzlich ist das Modul 50, wie in Fig. 6 links durch einen Bewegungspfeil angedeutet, durch einen Stellantrieb (nicht dargestellt) um eine Moduldrehachse drehbar an einem basisfesten Teil 313 des Grundkörpers gelagert. Die Modul- und Werkstückhalterungsdrehachse schließen in der in Fig. 6 gezeigten Betriebsstellung einen Winkel von 90° ein.

Die Positioniervorrichtung weist entsprechend insbesondere den Teil 312 des Grundkörpers sowie den Stellantrieb zum Verschieben der drehbar gelagerten Werkstückhalterung 310, 311 daran auf.

Die Arbeitsstation 306 weist ein Schwenklager 314 zum Verschwenken des Teils 312 des Grundkörpers und der daran gelagerten Werkstückhalterung 310, 311 relativ zu dem basisfestem Teil 313 des Grundkörpers und damit auch relativ zu der Basis 300 auf, insbesondere in eine vertikale Betriebsstellung und eine horizontale Lage, in der das Befestigen der Blisk bzw. des Spannfutters erleichtert ist.

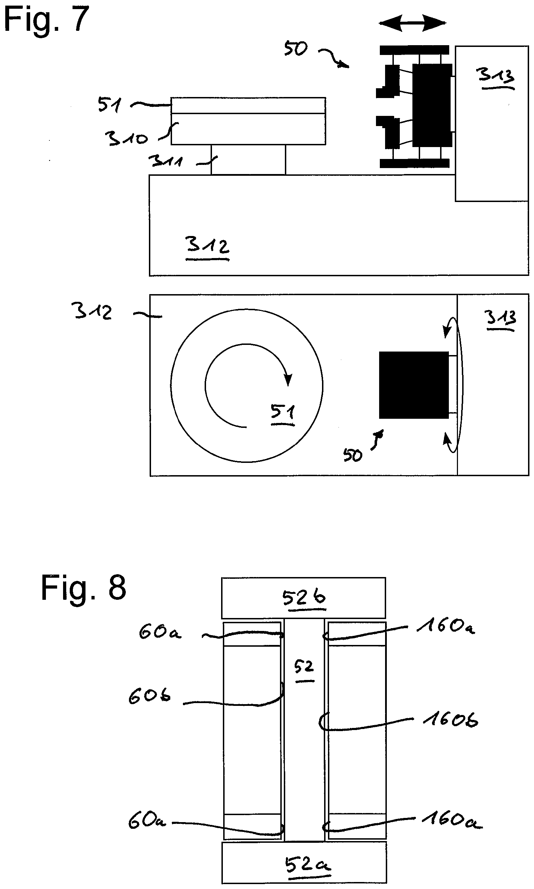

Figur 7 zeigt eine Arbeitsstation einer Anlage nach einer weiteren Ausführung der vorliegenden Erfindung in einer Seit- (oben in Fig. 7) und Draufsicht (unten in Fig. 7), die insbesondere anstelle der vorstehend mit Bezug auf Fig. 6 beschriebenen Arbeitsstation 306 oder einer der Arbeitsstationen 303 - 305 in der Anlage der Fig. 5 verwendet werden kann. Einander entsprechende Merkmale sind durch identische Bezugszeichen identifiziert, so dass auf die vorhergehende Beschreibung Bezug genommen und nachfolgend nur auf Unterschiede eingegangen wird.

In der Ausführung der Fig. 7 ist das Modul 50, wie in Fig. 7 oben durch einen Bewegungsdoppelpfeil angedeutet, durch einen Stellantrieb (nicht dargestellt) horizontal in einer Modullinearachse linear verschieblich an dem basisfesten Teil 313 des Grundkörpers gelagert, der in der Ausführung der Fig. 7 integral mit dem Teil 312 des Grundkörpers ausgebildet ist. Zusätzlich ist das Modul 50, wie in Fig. 7 unten durch einen Bewegungsdoppelpfeil angedeutet, durch einen Stellantrieb (nicht dargestellt) um die Moduldrehachse drehbar an dem Teil 313 des Grundkörpers gelagert.

Der Werkstückhalterungsflansch 311 und das damit lösbar verbundene Spannfutter 310 mit der daran lösbar befestigten Blisk 51 sind, wie in Fig. 7 unten durch einen Bewegungspfeil angedeutet, durch einen Stellantrieb (nicht dargestellt) um eine Werkstückhalterungsdrehachse drehbar an dem Teil 312 des Grundkörpers gelagert.

Auch hier schließen die Modul- und Werkstückhalterungsdrehachse einen Winkel von 90° ein. Die Modullinearachse schließt mit der Werkstückhalterungsdrehachse einen Winkel von 90° ein.

Die Positioniervorrichtung weist hier entsprechend insbesondere den Teil 313 des Grundkörpers sowie den Stellantrieb zum Verschieben des drehbar gelagerten Moduls 50 auf.

In der Ausführung der Fig. 6 verschiebt somit die Positioniervorrichtung die drehbar gelagerte Werkstückhalterung 310, 311 vertikal relativ zu dem drehbar gelagerten und ortsfesten Modul 50, in der Ausführung der Fig. 6 hingegen das drehbar gelagerte Modul 50 horizontal relativ zu der drehbar gelagerten und ortsfesten Werkstückhalterung 310, 311 an dem Grundkörper 312, 313.

Zusätzlich oder alternativ zu dem Messmittel 308 der nachgelagerten Arbeitsstation 307 verfügen eine oder mehrere der Arbeitsstationen 301, 303 - 306 über ein optisches oder taktiles Messmittel 315 zur Vermessung der Blisk 51 in situ. Ebenso wie das Messmittel 308 kann das Messmittel 315 beweglich an der jeweiligen Arbeitsstation 307 bzw. 306 gelagert sein.

Figur 8 zeigt eine Abwandlung des vorstehend mit Bezug auf Fig. 2 ausführlich beschriebenen Moduls 50 nach einer Ausführung der vorliegenden Erfindung. Dabei zeigt Fig. 8 nur einen Teil des Moduls 50, soweit dies zur Erläuterung der Abwandlung relevant ist. Einander entsprechende Merkmale sind durch identische Bezugszeichen identifiziert, so dass auf die vorhergehende Beschreibung Bezug genommen und nachfolgend nur auf Unterschiede eingegangen wird.

Die beiden spiegelbildlich ausgebildeten Elektroden 60 und 160 (vgl. auch Fig. 2) weisen jeweils erste Oberflächenarbeitsbereiche 60a bzw. 160a und hiervon verschiedene zweiten Oberflächenarbeitsbereiche 60b bzw. 160b auf. Im Ausführungsbeispiel sind die ersten Oberflächenarbeitsbereiche 60a, 160a Kantenbereiche der Elektrode 60 bzw. 160, die zweiten Oberflächenarbeitsbereiche 60b, 160b Flächenbereiche der Elektrode 60 bzw. 160.

Wahlweise, insbesondere zeitlich nacheinander, werden in einem ersten Betriebsmodus des Moduls 50 nur die ersten Oberflächenarbeitsbereiche 60a und/oder 160a zur elektrochemischen Bearbeitung des Werkstücks mit Spannung beaufschlagt, und in einem zweiten Betriebsmodus zusätzlich die zweiten Oberflächenarbeitsbereiche 60b bzw. 160b. Hierdurch können insbesondere Hinterschneidungen an Innen- und Außendeckbändern 52a, 52b der Schaufeln 52 einfach und/oder präzise bearbeitet werden.

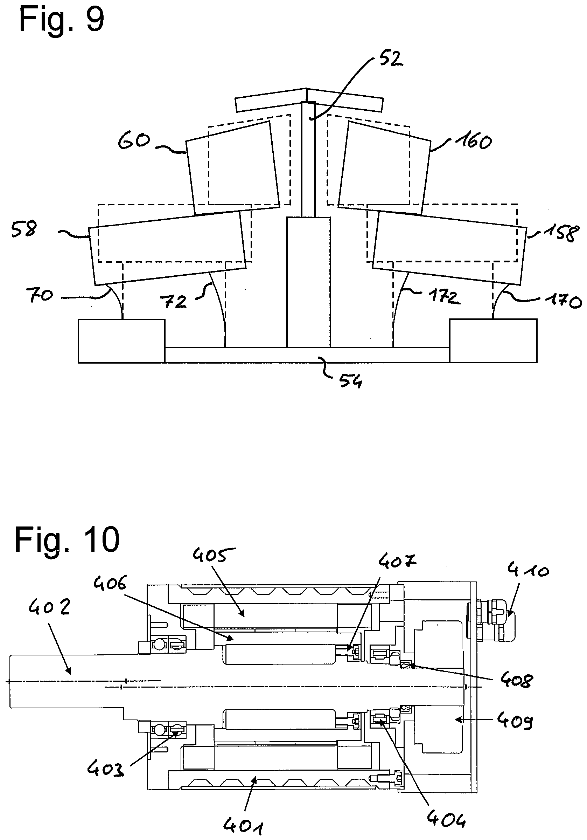

Figur 9 zeigt eine Abwandlung des vorstehend mit Bezug auf Fig. 2 bzw. 8 ausführlich beschriebenen Moduls 50 nach einer Ausführung der vorliegenden Erfindung. Dabei zeigt Fig. 9 wieder nur einen Teil des Moduls 50, soweit dies zur Erläuterung der Abwandlung relevant ist. Einander entsprechende Merkmale sind durch identische Bezugszeichen identifiziert, so dass auf die vorhergehende Beschreibung Bezug genommen und nachfolgend nur auf Unterschiede eingegangen wird.

In der Ausführung der Fig. 9 weisen die beiden Schwenkarme 70, 72 bzw. 170, 172, über die die Werkzeughalter 58 bzw. 158 mit dem Gestell 54 mechanisch verbunden sind (vgl. Fig. 2), jeweils unterschiedliche Längen auf. Hierdurch führen die durch die Antriebe 56, 156 bewegten Werkzeughalter gegenüber einer in Fig. 9 strichliert angedeuteten Ausgangslage, in der die beiden Schwenkarme 70, 72 bzw. 170, 172 undefomiert sind, zusätzlich zu der Oszillations- eine Kippbewegung relativ zu dem Gestell auf. Wie in Fig. 9 erkennbar, können auch hierdurch Hinterschnitte an Deckbändern der Schaufeln 52 bearbeitet werden.

Figur 10 zeigt, wiederum teilweise schematisiert, einen Antrieb eines vorstehend bereits beschriebenen Moduls 1 bzw. 50 nach einer Ausführung der vorliegenden Erfindung in Form eines Excenter-Torquemotors.

Dieser weist eine Wasserkühlung 401 auf. Eine Abtriebswelle ist als Excenterwelle 402 mit der Antriebsachse 14 (vgl. Fig. 1) bzw. 64 bzw. 164 (vgl. Fig. 2) und der Schwenkachse 16 (vgl. Fig. 1) bzw. 66 bzw. 166 (vgl. Fig. 2) ausgebildet. Die Excenterwelle ist abtriebsseitig (links in Fig. 10) in Keramikfestlagern 403 und abtriebsabgewandt (rechts in Fig. 10) in einem Keramikloslager 404 drehbar gelagert. Die Excenterwelle 402 ist mit einem magnetisch durch einen Stator 405 des Motors beaufschlagten Rotor 406 mittels Schrauben 407 verschraubt. Zusätzlich zeigt Fig. 10 eine Dichtung 408 der Excenterwelle, einen Drehgeber 409 sowie eine Stromversorgung 410.

### Bezugszeichenliste

| | | | |
|---|---|---|---|
| 1 | | ECM-Modul | |
| 2 | | Werkstück | |
| 4 | | Gestell | |
| 6 | | Antrieb | |
| 8 | | Werkzeughalter | |
| 10 | | Werkzeug (Elektrode) | |
| 12 | | Scheibe | |
| 14 | | Antriebsachse | |
| 16 | | Schwenkachse | |
| 18 | | Antriebsarm | |
| 20 | | erster Schwenkarm | |
| 22 | | zweiter Schwenkarm | |
| 24 | | erstes Gelenk | |
| 26 | | zweites Gelenk | |
| 28 | | drittes Gelenk | |
| 30 | | viertes Gelenk | |
| 32 | | fünftes Gelenk | |
| 40 | | Schaufel | |
| 42 | | Schaufelscheibe | |
| 44 | | Schaufelzwischenraum | |
| 46 | | vierter Schaufelzwischenraum | |
| 48 | | Rotationsachse | |
| 50 | | ECM-Modul | |
| 52 | | Schaufel | |
| 54 | | Gestell | |
| 56 | / 156 | erster Antrieb | / zweiter Antrieb |
| 58 | / 158 | erster Werkzeughalter | / zweiter Werkzeughalter |
| 60 | / 160 | erstes Werkzeug | / zweites Werkzeug |
| 62 | / 162 | erste Scheibe | / zweite Scheibe |
| 64 | / 164 | erste Antriebsachse | / zweite Antriebsachse |
| 66 | / 166 | erste Schwenkachse | / zweite Schwenkachse |
| 68 | / 168 | erster Antriebsarm | / zweiter Antriebsarm |
| 69 | / 169 | erste Wippe | / zweite Wippe |
| 70 | / 170 | erster Schwenkarm | / zweiter Schwenkarm |
| 72 | / 172 | erster Schwenkarm | / zweiter Schwenkarm |
| 80 | / 180 | erster Schubarm | / zweiter Schubarm |
| 82 | / 182 | erster Lagerungsarm | / zweiter Lagerungsarm |
| 200 | | sinusförmiger Elektrodenverlauf | |
| 201 | | rechteckige Spannung | |
| 205 | | gepulste Spannung | |
| 206 | | rechteckige Spannung | |
| 210 | | zweite Ausführung trapezförmiger Positionsverlauf | |
| 220 | | erste Ausführung trapezförmiger Positionsverlauf | |
| 230 | | Winkelkurve | |
| 51 | | Blisk | |
| 52a | | Innendeckband | |
| 52b | | Außendeckband | |
| 60a; 160a | | Kantenbereich (erster Oberflächenarbeitsbereich) | |
| 60b; 160b | | Flächenbereich (zweiter Oberflächenarbeitsbereich) | |
| 300 | | Basis | |
| 301; 303- 307 | | Arbeitsstation | |
| 308, 315 | | Messmittel | |
| 310 | | Spannfutter (Werkzeughalterung) | |
| 311 | | Werkzeughalterungsflansch (Werkzeughalterung) | |
| 312, 313 | | Grundkörperteil | |
| 314 | | Schwenklager | |
| 401 | | Wasserkühlung | |
| 402 | | Excenterwelle | |
| 403 | | Keramikfestlager | |
| 404 | | Keramikloslager | |
| 405 | | Stator | |
| 406 | | Rotor | |
| 407 | | Schraube | |
| 408 | | Dichtung | |
| 409 | | Drehgeber | |
| 410 | | Stromversorgung | |

## Patentansprüche

1. Anlage mit einer Basis (300) und wenigstens einer Arbeitsstation (306) mit einem ECM-Modul (50) zur elektrochemischen Bearbeitung eines Werkstücks (51), wobei das ECM-Modul aufweist:
ein Gestell (4, 54); und
eine Elektrodenanordnung mit
wenigstens einer Elektrode (60, 160), die einen ersten Oberflächenarbeitsbereich (60a, 160a) und einen zweiten Oberflächenarbeitsbereich (60b, 160b) aufweist und mit dem Gestell (54) mechanisch verbunden ist, und
einem Antrieb (6, 56, 156) zum Bewegen dieser Elektrode (60, 160), der an dem Gestell (54) befestigt ist;
einer Werkstückhalterung (310, 311) zur lösbaren Befestigung des Werkstücks (2, 51, 52); und
einer Positioniervorrichtung zum Verschieben der Werkstückhalterung (310, 311) und des Moduls (1, 50) relativ zueinander,
wobei die Positioniervorrichtung einen Grundkörper (312, 313) aufweist, **dadurch gekennzeichnet, dass** an dem Grundkörper (312, 313) sowohl die, insbesondere drehbar gelagerte, Werkstückhalterung (310, 311) als auch das drehbar gelagerte ECM-Modul (50), insbesondere vertikal oder horizontal, linear verschieblich gelagert sind.

2. Anlage mit einem ECM-Modul nach Anspruch 1, **dadurch gekennzeichnet, dass** das ECM-Modul (50) einen ersten Betriebsmodus, in dem nur der erste Oberflächenarbeitsbereich (60a, 160a) zur elektrochemischen Bearbeitung des Werkstücks (2, 51, 52) mit Spannung beaufschlagt ist, und einen zweiten Betriebsmodus aufweist, in dem zusätzlich oder alternativ der zweite Oberflächenarbeitsbereich (60b, 160b) zur elektrochemischen Bearbeitung des Werkstücks (2, 51, 52) mit Spannung beaufschlagt ist.

3. Anlage mit einem ECM-Modul nach Anspruch 1 oder 2, **dadurch gekennzeichnet, dass** die Elektrode (10, 60, 160) mit dem Gestell (4, 54) über einen Werkzeughalter (8, 58, 158) mechanisch verbunden ist, der über zwei Schwenkarme (20, 22; 70, 72; 170, 172) unterschiedlicher Länge mit dem Gestell (4, 54) mechanisch verbunden ist.

4. Anlage mit einem ECM-Modul (50) nach einem der vorhergehenden Ansprüche, **dadurch gekennzeichnet, dass** der Antrieb eine Wasserkühlung (401) aufweist.

5. Anlage mit einem ECM-Modul (50) nach einem der vorhergehenden Ansprüche, **dadurch gekennzeichnet, dass** der Antrieb (6, 56, 156) einen Elektromotor aufweist, dessen Abtriebswelle als Excenterwelle (402) mit einer Antriebsachse (14, 64, 164) und einer parallel versetzten Schwenkachse (16, 66, 166) ausgebildet und in wenigstens einem Keramiklager (403, 404) drehbar gelagert und/oder mit einem magnetisch beaufschlagten Rotor (406) verschraubt (407) ist.

6. Anlage mit einem ECM-Modul (50) nach einem der vorhergehenden Ansprüche, **dadurch gekennzeichnet, dass** die Werkstückhalterung ein Spannfutter (310) zur lösbaren Befestigung des Werkstücks (51) aufweist, das lösbar mit dem Grundkörper (312) verbunden ist.

7. Anlage mit einem ECM-Modul (50) nach einem der vorhergehenden Ansprüche, **dadurch gekennzeichnet, dass** die Positioniervorrichtung einen Roboter mit wenigstens zwei aktuierten Drehgelenken zum Verschieben der Werkstückhalterung relativ zu dem ECM-Modul (50) aufweist.

8. Anlage mit einem ECM-Modul (50) nach einem der vorhergehenden Ansprüche , **dadurch gekennzeichnet, dass** die Positioniervorrichtung einen Kran mit einer Hubvorrichtung und/oder Roboter mit wenigstens zwei aktuierten Drehgelenken zum Transfer des Werkstücks (51) aus einer weiteren Arbeitsstation (305) und/oder einem Puffer und/oder in eine weitere Arbeitsstation (307) und/oder einen Puffer der Anlage aufweist.

9. Anlage mit einem ECM-Modul (50) nach einem der vorhergehenden Ansprüche, **gekennzeichnet durch** ein Schwenklager (314) zum Verschwenken der Werkstückhalterung (310, 311) relativ zu der Basis (300), insbesondere in eine vertikale und/oder horizontale Lage.

10. Anlage mit einem ECM-Modul (50) nach einem der vorhergehenden Ansprüche, **gekennzeichnet durch** ein Messmittel (308, 315) zur, insbesondere optischen und/oder taktilen, Vermessung des, insbesondere an der Werkstückhalterung (310, 311) befestigten, Werkstücks (51).

11. Anlage mit einem ECM-Modul (50) nach einem der vorhergehenden Ansprüche, **gekennzeichnet durch** eine vorgeschaltete weitere Arbeitsstation (301-305) zur, insbesondere elektrochemischen oder generativen, Herstellung einer ersten Außenkontur des Werkstücks (51), die gegenüber einer zweiten Außenkontur des Werkzeugs nach der Bearbeitung in der nachgeschalteten Arbeitsstation (306) ein Aufmaß aufweist.

12. Verfahren zur elektrochemischen Bearbeitung eines Werkstücks (2, 51, 52) mittels einer Anlage nach einem der vorhergehenden Ansprüche, mit den Schritten:
a. lösbares Befestigen des Werkstücks (2, 51, 52) an der Werkstückhalterung (310, 311); und
b. Verschieben der Werkstückhalterung (310, 311) und/oder des Moduls (1, 50) relativ zueinander.

13. Verfahren zur elektrochemischen Bearbeitung eines Werkstücks (2, 51, 52) mittels einer Anlage nach einem der vorhergehenden Ansprüche, wobei in dem ersten Betriebsmodus des ECM-Moduls (1, 50) nur der erste Oberflächenarbeitsbereich (60a, 160a) zur elektrochemischen Bearbeitung des Werkstücks (1, 51, 52) mit Spannung beaufschlagt wird, und in dem zweiten Betriebsmodus des ECM-Moduls (1, 50) zusätzlich oder alternativ der zweite Oberflächenarbeitsbereich (60b, 160b) zur elektrochemischen Bearbeitung des Werkstücks (1, 51, 52) mit Spannung beaufschlagt wird.

## Claims

1. System having a base (300) and at least one work station (306) which has an ECM module (50) for electrochemically machining a workpiece (51), wherein the ECM module comprises:
a frame (4, 54); and
an electrode arrangement having
at least one electrode (60, 160) which comprises a first surface work region (60a, 160a) and a second surface work region (60b, 160b) and is mechanically connected to the frame (54), and
a drive (6, 56, 156) for driving this electrode (60, 160), which drive is attached to the frame (54);
a workpiece holder (310, 311) for detachably attaching the workpiece (2, 51, 52); and
a positioning device for moving the workpiece holder (310, 311) and the module (1, 50) relative to one another,
wherein
the positioning device comprises a main body (312, 313),
**characterized in that** both the, in particular rotatably mounted, workpiece holder (310, 311) and the rotatably mounted ECM module (50) are mounted on the main body (312, 313) so as to be movable linearly, in particular vertically or horizontally.

2. System having an ECM module according to claim 1, **characterized in that** the ECM module (50) has a first operating mode, in which only the first surface work region (60a, 160a) is supplied with voltage for electrochemically machining the workpiece (2, 51, 52), and a second operating mode, in which, additionally or alternatively, the second surface work region (60b, 160b) is supplied with voltage for electrochemically machining the workpiece (2, 51, 52).

3. System having an ECM module according to either claim 1 or claim 2, **characterized in that** the electrode (10, 60, 160) is mechanically connected to the frame (4, 54) via a tool holder (8, 58, 158) which is mechanically connected to the frame (4, 54) via two pivot arms (20, 22; 70, 72; 170, 172) of different lengths.

4. System having an ECM module (50) according to any of the preceding claims, **characterized in that** the drive has a water cooling apparatus (401).

5. System having an ECM module (50) according to any of the preceding claims, **characterized in that** the drive (6, 56, 156) comprises an electric motor, of which the output shaft is designed as an eccentric shaft (402) having a drive axis (14, 64, 164) and a pivot axis (16, 66, 166) offset in parallel and which is rotatably mounted in at least one ceramic bearing (403, 404) and/or screwed (407) to a rotor (406) which is acted upon magnetically.

6. System having an ECM module (50) according to any of the preceding claims, **characterized in that** the workpiece holder comprises a chuck (310) for detachably attaching the workpiece (51), which chuck is detachably connected to the main body (312).

7. System having an ECM module (50) according to any of the preceding claims, **characterized in that** the positioning device comprises a robot having at least two actuated rotary joints for moving the workpiece holder relative to the ECM module (50).

8. System having an ECM module (50) according to any of the preceding claims, **characterized in that** the positioning device comprises a crane having a lifting device and/or robot having at least two actuated rotary joints for transferring the workpiece (51) from a further work station (305) and/or a buffer and/or into a further work station (307) and/or a buffer of the system.

9. System having an ECM module (50) according to any of the preceding claims, **characterized by** a pivot bearing (314) for pivoting the workpiece holder (310, 311) relative to the base (300), in particular into a vertical and/or horizontal position.

10. System having an ECM module (50) according to any of the preceding claims, **characterized by** a measuring means (308, 315) for, in particular optically and/or tactilely, measuring the workpiece (51) which is in particular attached to the workpiece holder (310, 311).

11. System having an ECM module (50) according to any of the preceding claims, **characterized by** an upstream further work station (301-305) for, in particular electrochemically or generatively, producing a first outer contour of the workpiece (51) which comprises a machining allowance with respect to a second outer contour of the tool after machining in the downstream work station (306).

12. Method for electrochemically machining a workpiece (2, 51, 52) by means of a system according to any of the preceding claims, comprising the steps of:
a. detachably attaching the workpiece (2, 51, 52) to the workpiece holder (310, 311); and
b. moving the workpiece holder (310, 311) and/or the module (1, 50) relative to one another.

13. Method for electrochemically machining a workpiece (2, 51, 52) by means of a system according to any of the preceding claims, wherein, in the first operating mode of the ECM module (1, 50), only the first surface work region (60a, 160a) is supplied with voltage for electrochemically machining the workpiece (1, 51, 52) and, in the second operating mode of the ECM module (1, 50), additionally or alternatively, the second surface work region (60b, 160b) is supplied with voltage for electrochemically machining the workpiece (1, 51, 52).

## Revendications

1. Installation comportant une base (300) et au moins un poste de travail (306) comportant un module ECM (50) pour l'usinage électrochimique d'une pièce (51), dans laquelle le module ECM présente :
un bâti (4, 54) ; et
un ensemble d'électrodes comportant
au moins une électrode (60, 160) qui présente une première zone de travail de surface (60a, 160a) et une seconde zone de travail de surface (60b, 160b) et est reliée mécaniquement au bâti (54), et
un entraînement (6, 56, 156) destiné à déplacer cette électrode (60, 160), lequel est fixé au bâti (54) ;
un support pour pièce (310, 311) destiné à fixer de façon amovible la pièce (2, 51, 52) ; et
un dispositif de positionnement destiné à déplacer le support pour pièce (310, 311) et le module (1, 50) l'un par rapport à l'autre,
dans laquelle
le dispositif de positionnement présente un corps de base (312, 313), **caractérisée en ce qu'**à la fois le support pour pièce (310, 311), en particulier monté de manière à pouvoir tourner, et le module ECM (50) monté de manière à pouvoir tourner sont montés de façon à pouvoir être déplacés linéairement, en particulier verticalement ou horizontalement, sur le corps de base (312, 313).

2. Installation comportant un module ECM selon la revendication 1, **caractérisée en ce que** le module ECM (50) présente un premier mode de fonctionnement dans lequel seule la première zone de travail de surface (60a, 160a) est alimentée en tension pour l'usinage électrochimique de la pièce (2, 51, 52), et un second mode de fonctionnement dans lequel la seconde zone de travail de surface (60b, 160b) est également ou alternativement alimentée en tension pour l'usinage électrochimique de la pièce (2, 51, 52).

3. Installation comportant un module ECM selon la revendication 1 ou 2, **caractérisée en ce que** l'électrode (10, 60, 160) est reliée mécaniquement au bâti (4, 54) par l'intermédiaire d'un support pour pièce (8, 58, 158) qui est relié mécaniquement au bâti (4, 54) par l'intermédiaire de deux bras pivotants (20, 22 ; 70, 72 ; 170, 172) de longueurs différentes.

4. Installation comportant un module ECM (50) selon l'une des revendications précédentes, **caractérisée en ce que** l'entraînement présente un système de refroidissement à eau (401).

5. Installation comportant un module ECM (50) selon l'une des revendications précédentes, **caractérisée en ce que** l'entraînement (6, 56, 156) présente un moteur électrique dont l'arbre de sortie est réalisé sous forme d'arbre excentrique (402) comportant un axe d'entraînement (14, 64, 164) et un axe de pivotement (16, 66, 166) décalé parallèlement et est monté de manière à pouvoir tourner dans au moins un palier en céramique (403, 404) et/ou est vissé (407) sur un rotor (406) chargé magnétiquement.

6. Installation comportant un module ECM (50) selon l'une des revendications précédentes, **caractérisée en ce que** le support pour pièce présente un mandrin de serrage (310) permettant de fixer de façon amovible la pièce (51), lequel mandrin de serrage est relié de façon amovible au corps de base (312).

7. Installation comportant un module ECM (50) selon l'une des revendications précédentes, **caractérisée en ce que** le dispositif de positionnement présente un robot comportant au moins deux articulations rotatives actionnées pour déplacer le support pour pièce par rapport au module ECM (50).

8. Installation comportant un module ECM (50) selon l'une des revendications précédentes, **caractérisée en ce que** le dispositif de positionnement présente une grue comportant un dispositif de levage et/ou un robot comportant au moins deux articulations rotatives actionnées pour transférer la pièce (51) d'un autre poste de travail (305) et/ou d'un tampon et/ou dans un autre poste de travail (307) et/ou dans un tampon de l'installation.

9. Installation comportant un module ECM (50) selon l'une des revendications précédentes, **caractérisée par** un palier de pivotement (314) destiné à faire pivoter le support pour pièce (310, 311) par rapport à la base (300), en particulier dans une position verticale et/ou horizontale.

10. Installation comportant un module ECM (50) selon l'une des revendications précédentes, **caractérisée par** un moyen de mesure (308, 315) pour mesurer, en particulier de manière optique et/ou tactile, la pièce (51), en particulier fixée au support pour pièce (310, 311).

11. Installation comportant un module ECM (50) selon l'une des revendications précédentes, **caractérisée par** un autre poste de travail en amont (301-305) pour la fabrication, en particulier électrochimique ou générative, d'un premier contour extérieur de la pièce (51) qui présente une surépaisseur par rapport à un second contour extérieur de la pièce après l'usinage dans le poste de travail en aval (306).

12. Procédé permettant l'usinage électrochimique d'une pièce (2, 51, 52) à l'aide d'une installation selon l'une des revendications précédentes, comportant les étapes consistant à :
a. fixer de façon amovible la pièce (2, 51, 52) au support pour pièce (310, 311) ; et
b. déplacer le support pour pièce (310, 311) et/ou le module (1, 50) l'un par rapport à l'autre.

13. Procédé permettant l'usinage électrochimique d'une pièce (2, 51, 52) à l'aide d'une installation selon l'une des revendications précédentes, dans lequel, dans le premier mode de fonctionnement du module ECM (1, 50), seule la première zone de travail de surface (60a, 160a) est alimentée en tension pour l'usinage électrochimique de la pièce (1, 51, 52), et, dans le second mode de fonctionnement du module ECM (1, 50), la seconde zone de travail de surface (60b, 160b) est également ou alternativement alimentée en tension pour l'usinage électrochimique de la pièce (1, 51, 52).
